**Europäisches Patentamt**

**European Patent Office**

**Office européen des brevets**

(11) Veröffentlichungsnummer: **0 254 749**
**A1**

(12) # EUROPÄISCHE PATENTANMELDUNG
Veröffentlicht nach Art. 158 Abs. 3 EPÜ

(21) Anmeldenummer: 87901771.3

(22) Anmeldetag: 05.02.87

Daten der zugrundeliegenden internationalen Anmeldung:

(86) Internationale Anmeldenummer:
PCT/SU87/00019

(87) Internationale Veröffentlichungsnummer:
WO87/04844 (13.08.87 87/18)

(51) Int. Cl.³: **G 11 B 7/24**

(30) Priorität: 07.02.86 SU 3134541
07.02.86 SU 3134137

(43) Veröffentlichungstag der Anmeldung:
03.02.88 Patentblatt 88/5

(84) Benannte Vertragsstaaten:
AT BE CH DE FR GB IT LI LU NL SE

(71) Anmelder: INSTITUT PROBLEM MODELIROVANIA V
ENERGETIKE AKADEMII NAUK UKRAINSKOI SSR
pr. Pobedy, 56
Kiev, 252680(SU)

(72) Erfinder: PETROV, Vyacheslav Vasilievich
ul. Montazhnikov, 104
Kiev, 252069(SU)

(72) Erfinder: ANTONOV, Alexandr Alexandrovich
pr. Vernadskogo, 85-64
Kiev, 252142(SU)

(72) Erfinder: TOKAR, Alexandr Petrovich
pr. Korneichuka, 30-161
Kiev, 252205(SU)

(72) Erfinder: KRJUCHIN, Andrei Andreevich
ul. Juliusa Fuchika, 8-13
Kiev, 252049(SU)

(72) Erfinder: SHANOILO, Semen Mikhailovich
ul. A.Malyshko, 15-27
Kiev, 252206(SU)

(72) Erfinder: SKURIDIN, Vladimir Petrovich
ul. Semashko, 21-92
Kiev, 252142(SU)

(72) Erfinder: GAPCHENKO, Leonid Michailovich
ul. Tarasovskaya, 3a-16
Kiev, 252033(SU)

(72) Erfinder: KOVTUN, Valery Dmitrievich
ul. Otto Shmidta, 35/37-8
Kiev, 252107(SU)

(72) Erfinder: DEMYANOV, Marat Lvovich
ul. Zakrevskogo, 39-47
Kiev, 252217(SU)

(72) Erfinder: ZELINSKY, Alexandr Antonovich
ul. Yakuba Kolasa, 5-231
Kiev, 252146(SU)

(72) Erfinder: GRINKO, Dmitry Alexandrovich
ul. Akademika Dobrokhotova, 4-71
Kiev, 252142(SU)

(72) Erfinder: ANANCHENKO, Tatyana Petrovna
pr. Nauki, 40-94, 16a-57
Kiev, 252028(SU)

(72) Erfinder: KOSTSEVICH, Georgy Nikolaevich
ul. Polovetskaya, 16a-57
Kiev, 252107(SU)

(74) Vertreter: Lehn, Werner, Dipl.-Ing. et al,
Hoffmann, Eitle & Partner Patentanwälte Arabellastrasse
4
D-8000 München 81(DE)

(54) OPTISCHE SPEICHERVORRICHTUNG.

(57) Vorgeschlagen ist ein optischer Speicher, bei dem der zylindrische Informationsträger (2) in einem fest angebrachten zylindrischen Behälter (14) untergebracht ist, der

./...

EP 0 254 749 A1

mit einem für den Strahlungsfluß von der Quelle (1) einer modulierten kohärenten Strahlung durchsichtigen flüssigen oder gasförmigen Medium gefüllt ist. Der zylindrische Informationsträger (2) hat einen Drehantrieb, während auf das röhrenförmige Substrat (11) des zylindrischen Informationsträgers (2) eine aufzeichnungsschicht (12) aufgetragen ist, wobei der zylindrische Informationsträger (2) mit dem Quelle (1) der modulierten kohärenten Strahlung und mit einer Informationsadressierungseinheit (3) optisch gekoppelt ist, die mit Möglichkeit einer axialen Verschiebung optischer Elemente relativ zum zylindrischen Informationsträger (2) angeordnet ist.

FIG.1

OPTISCHER SPEICHER

Gebiet der Technik

Die vorliegende Erfindung betrifft Einrichtungen zur Speicherung von Informationen und bezieht sich insbesondere auf optische Speicher.

Stand der Technik

Der Intellekt der Rechentechnik wird in bedeutendem Maße durch die Vollkommenheit externer Speicher bestimmt, Zur Zeit ist die reale Arbeitsgeschwindigkeit der elektronischen Rechner wegen unvollkommener externer Speichereinrichtungen um 2 bis 3 Größenordnungen geringer als die Rechengeschwindigkeit des Rechenwerkes des elektronischen Rechners ist. Zu den wichtigsten technischen Kenngrößen der externen Speicher gehören Speicherkapazität, Schreibdichte, Datenauswahlzeit, Informationsaustauschgeschwindigkeit, und Zuverlässigkeit der Informationsspeicherung. Gegenüber den magnetischen externen Speichereinrichtungen besitzen die optischen externen Speicher einige Vorteile, nämlich: höhere Speicherkapazität, größere Schreibdichte, erhöhte Zuverlässigkeit bei der Informationsspeicherung, woher die externen optischen Speicher als aussichtsreicher im Vergleich zu den externen magnetischen Speichern angesehen werden.

Es ist ein optischer Speicher (JEEE Spectrum, 1979, II, Nr. 2, pp. 33 bis 38) bekannt, der -optisch gekoppelt- eine einen Laser und einen Lichtmodulator umfassende Quelle einer modulierten elektromagnetischen Strahlung, einen als hermetisch abgeschlossene Platte ausgebildeten beweglichen Informationsträger, auf dessen Innenflächen der durchsichtigen Wänden eine Aufzeichnungsschicht aufgetragen ist, und eine Informationsadressierungseinheit enthält.

Diese optische Speichereinrichtung hat jedoch eine niedrige Zuverlässigkeit und eine geringe Schreibdichte. Die niedrige Zuverlässigkeit ist durch die geringe mechanische Festigkeit der hermetischen optischen Platte sowie durch Verformungen ihrer Arbeitsflächen bei Schwankungen des Atmosphärendrucks bedingt. Die geringe Schreibdichte

ist durch Unbeständigkeit der Oberflächen-Schreibdichte für Spuren verschiedenen Halbmessers sowie durch geringe Auflösung eines "trockenen" Objektivs im beweglichen optischen Kopf bedingt (dessen numerische Apertur somit geringer als eins ist).

Am nächsten kommt der vorliegenden Erfindung nach dem technischen Wesen und der erreichbaren positiven Wirkung ein optischer Speicher (GB 1580398), welcher -optisch gekoppelt- eine Quelle einer modulierten kohärenten Strahlung, einem zylindrischen Informationsträger mit einem Antrieb zu dessen Drehung und eine Informationsadressierungseinheit.

Der zylindrische Informationsträger stellt einen steifen undurchsichtigen Zylinder dar, auf dessen Außenfläche eine Aufzeichnungsschicht aufgebracht und an dem mit Hilfe von Distanzringen ein relativ dünner durchsichtiger Außenschutzzylinder befestigt ist. Im Laufe des Betriebs rotiert dabei der Außenschutzzylinder zusammen mit dem steifen undurchsichtigen Zylinder.

Um Verformungen des Außenschutzzylinders bei Schwankgen des atmosphärischen Druckes zu verhindern, ist eine Verbindung des Innenraums dieses zylindrischen optischen Informationsträgers mit der Umgebung vorgesehen.

Jedoch besitzt ein solcher optischer Speicher eine geringe Schreibdichte und eine niedrige Schreibzuverlässigkeit sowie eine kleine Festigkeit. Die geringe Schreibdichte ist durch den Umstand bedingt, daß die zur Aufzeichnung von Informationen benutzte Aufzeichnungsschicht nur auf die Außenfläche des steifen undurchsichtigen Zylinders aufgebracht werden kann, sowie durch Verwendung eines "trockenen" Objektivs. Die niedrige Schreibzuverlässigkeit ist auf fehlende Isolierung des Innenraums des Informationsträgers von der Umgebung zurückzuführen, weshalb bei Änderung seiner Temperaturverhältnisse im Laufe des Betriebs gegenüber der Umgebungstemperatur ein solcher Informationsträger "atmet". Dabei dringen in seinen Innenraum Staub, Feuchtigkeit und andere Verunreinigungen ein, die sich unmittelbar auf der Oberfläche der Aufzeichnungsschicht absetzen, wodurch die Zuverlässigkeit des Schreib-Lese-Vorganges wesentlich herabgesetzt wird.

Die niedrige Zuverlässigkeit ist auch durch ein erhöhtes Risiko bedingt, daß die Oberfläche des durchsichtigen Schutzzylinders beschädigt werden kann, der samt dem Hauptszylinder mit einer großen Geschwindigkeit gedreht wird. Die geringe Festigkeit ist auf die vorgeschlagene Bauart des Informationsträgers zurückzuführen.

Offenbarung der Erfindung

Der vorliegenden Erfindung liegt die Aufgabe zugrunde, einen optischen Speicher zu schaffen, dessen konstruktive Ausführung es gestattet, die Schreibzuverlässigkeit und -dichte zu steigern.

Dies wird dadurch erreicht, daß im optischen Speicher, der -optisch gekoppelt- eine Quelle einer modulierten kohärenten Strahlung, einen zylindrischen Informationsträger mit einem Antrieb zu dessen Drehung und mit einer auf das röhrenförmige Substrat des zylindrischen Informationsträgers aufgebrachten Aufzeichnungsschicht und eine Informationsadressierungseinheit, die mit Möglichkeit einer axialen Verschiebung optischer Elemente in bezug auf den zylindrischen Informationsträger angeordnet ist, enthält, gemäß der zylindrische Informationsträger in einem fest angebrachten zylindrischen Behälter untergebracht ist, der mit einem für den Strahlungsfluß von der Quelle der modulierten kohärenten Strahlung durchsichtigen flüssigen oder gasförmigen Medium gefüllt ist.

Zweckmäßigerweise wird im optischen Speicher als Drehantrieb des zylindrischen Informationsträgers ein Elektromotor verwendet, dessen Läufer mindestens an einer der Stirnseiten des zylindrischen Informationsträgers und dessen Ständer an der Außenfläche des feststehenden zylindrischen Behälters angebracht ist.

Vorteilhaft ist, daß im optischen Speicher als Drehantrieb des zylindrischen Informationsträgers ein Elektromotor benutzt wird, dessen Läufer an der Seitenfläche des zylindrischen Informationsträgers und dessen Ständer an der Außenfläche des feststehenden zylindrischen Behälters angebracht ist.

- 4 -

Solch eine Ausführung des optischen Speichers sichert eine wesentliche Erhöhung der Zuverlässigkeit beim Schreiben und Lesen in Informationen durch den wirksamen Schutz des zylindrischen Informationsträgers vor Verunreinigungen und Beschädigungen. Falls der Informationsträger im optischen Speicher ausgewechselt werden muß, erfolgt der Wechsel des zylindrischen Behälters mit dem darin befindlichen zylindrischen Informationsträger. Daher wird aus dem zylindrischen Behälter der Informationsträger niemals herausgenommen, wodurch seine Beschädigungen und Verunreinigungen vermieden werden.

Es ist zweckdienlich, daß an den Stirnenden des röhrenförmigen Substrats des zylindrischen Informationsträgers Abdichtungsbuchsen angeordnet sind.

Die Abdichtung des Innenraums des zylindrischen Informationsträgers macht es möglich, hoch effektive Aufzeichnungsschichten zu verwenden, die aus Werkstoffen bestehen, die unbeständig, z.B. oxydierbar im Luftmedium oder gibtig sind, sowie ermöglicht die Ausnutzung von wirksamen Verfahren zur Regenerierung der Aufzeichnungsschicht, z.B. durch Verwendung einer Hochfrequenzentladung im Innenraum des zylindrischen Informationsträgers, der mit einem gegenüber den Werkstoffen des Informationsträgers inerten Gas gefüllt ist.

Es ist auch zweckmäßig, daß der feststehende zylindrische Behälter aus einem für den Strahlungsfluß undurchsichtigen Werkstoff hergestellt ist und in seiner zylindrischen Wand mindestens ein Schlitz vorhanden ist, in dem ein für den Strahlungsfluß von der Quelle der modulierten kohärenten Strahlung durchsichtiges Element angeordnet ist.

Es ist wünschenswert, daß das im Schlitz angeordnete durchsichtige Element als zylindrische Linse ausgebildet ist.

Die Verwendung des undurchsichtigen zylindrischen Behälters ermöglicht den Schutz des in diesem untergebrachten zylindrischen Informationsträgers gegen Lichteinwirkungen, z.B. Sonnenstrahlen, welche die Aufzeichnungsschicht zerstören Daher ist zur Zuleitung des Strahlungsflusses vom Laser

zum zylindrischen Informationsträger in der Wand des zylindrischen Behälters mindestens ein Schlitz vorgesehen ist, in dem das durchsichtige Element Platz findet. Wird als letzteres eine zylindrische Linse verwendet, so kann im optischen System die Korrektion der gekrümmten Fläche des zylindrischen Informationsträgers vorgenommen werden.

Im zylindrischen Informationsträger kann die Aufzeichnungsschicht auf die Außen- und Innenfläche des röhrenförmigen Substrate aufgetragen werden.

Dies bietet die Möglichkeit, die räumliche Schreibdichte bei der Aufzeichnung von Informationen um das zweifache zu erhöhen.

Es ist von Vorteil, daß auf die Außenfläche des zylindrischen Informationsträgers eine für den Strahlungsfluß von der Quelle der modulierten kohärenten Strahlung durchsichtige elektrisch leitende Schicht aufgetragen ist, die mit der elektrisch leitenden zylindrischen Behälter in elektrischem Kontakt steht.

Dadurch wird das Abfließen einer Ladung statischer Elektrizität von der Außenfläche des zylindrischen Informationsträgers, welche wegen dessen Reibung an einem flüssigen bzw. gasförmigen Medium während der Drehung entsteht, zum elektrisch leitenden zylindrischen Begälter gewährleistet. Somit wird die Verunreinigung der Fläche des zylindrischen Informationsträgers verringert und dementsprechend die Schreibzuverlässigkeit gesteigert.

Kurzbeschreibung der Zeichnungen

Im weiteren wird die Erfindung an Hand von Ausführungsbeispielen unter Bezugnahme auf die beigefügten Zeichnungen näher erläutert. Es zeigen:

Fig. I eine Gesamtansicht des erfindungsgemäßen optischen Speichers;

Fig. 2 eine Ausführungsform des zylindrischen Informationsträgers, der im fest angeordneten zylindrischen Behälter untergebracht ist und für den als Drehantrieb ein Elektromotor verwendet wird;

Fig. 3 das gleiche wie in Fig. 2, aber mit einer anderen Anordnung des Läufers und des Ständers des Elektromotors;

Fig. 4 einen zylindrischen Informationsträger, der in einem zylindrischen Behälter untergebracht ist, der mit einem flüssigen Medium gefüllt ist;

Fig. 5 dasselbe wie in Fig. 4, aber mit zwei Schlitzen in der Wand des zylindrischen Behälters, in denen durchsichtige Elemente angeordnet sind.

Beste Ausführungsform der Erfindung

Der erfindungsgemäße optische Speicher enthält -optisch gekoppelt- eine Quelle 1 einer modulierten kohärenten Strahlung, einen zylindrischen Informationsträger 2 mit einem Antrieb zu dessen Drehung und eine Informationsadressierungseinheit 3, die mit Möglichkeit einer axialen Verschiebung deren optischer Elemente relativ zum zylindrischen Informationsträger 2 angeordnet ist.

Die Quelle 1 der modulierten kohärenten Strahlung enthält -optisch gekoppelt- einen Laser 4, einen optischen Modulator 5 und einen Polarisationslichtteiler 6. Der eine Ausgang des letzteren ist mit einem Fotoempfänger 7 optisch verbunden, während der andere Ausgang des Polarisationslichtteilers 6 über eine Viertelwellenplatte 8 mit einer Informationsadressierungseinheit 3 und dem zylindrischen Informationsträger optisch gekoppelt ist.

Die Informationsadressierungseinheit 3 enthält -optisch gekoppelt- ein den Strahlungsfluß von der Quelle I aufnehmendes Prisma 9 und eine Linse IO, durch die der Strahlungsfluß auf den zylindrischen Informationsträger 2 gegeben wird. Der zylindrische Informationsträger 2 ist aus einem für den Strahlungsfluß von der Quelle I der modulierten kohärenten Strahlung durchsichtigen röhrenförmigen Substrat II (z.B. aus Quarzglas)hergestellt, auf dessen Außen- und Innenfläche eine Aufzeichnungsschicht I2 und eine Schutzschicht I3 aufgetragen ist.

Der zylindrische Informationsträger 2 ist koaxial in einem ortsfest eingebauten Behälter I4 angeordnet, in dessen Seitenwand ein Schlitz I5 ausgeführt ist, in der ein optisches Element angeordnet ist. Der zylindrische Behälter I4 ist mit einem gasförmigen Medium, z.B. Luft, gefüllt und aus einem undurchsichtigen Werkstoff hergestellt.

Das im Innenraum des zylindrischen Behälters I5 be-

findliche Medium wird von außen unter Überdruck über (in der Zeichnung der Vereinfachung halber nicht gezeigte) Düse zugeführt und bildet eine Gasschmierung. Dies sichert eine ungehinderte Drehung des zylindrischen Informationsträgers 2 relativ zum zylindrischen Behälter 14.

An den Stirnenden des röhrenförmigen Substrates 11 sind Läufer 16 eines Elektromotors zur Drehung des zylindrischen Informationsträgers 2 eingebaut, dessen Ständer 17 an den Seitenwand des zylindrischen Behälters 14 angebracht sind.

In dem zylindrischen Behälter 14 bringt man den zylindrischen Informationsträger 2 mit vorher aufgebrachten Bezugsspuren und erforderlichen Dienstinformationen unter, die auf der Informationsspuren geschrieben sind. Im Betrieb wird der zylindrische Informationsträger 2 mit Hilfe des Elektromotors gedreht, und über den Schlitz 15, in dem ein durchsichtiges optisches Element angeordnet ist, wird vom Laser 15 ein unmodulierter Strahlungsfluß mit einer Intensität zugeleitet, die dem Lesebetrieb entspricht. Der reflektierte Strahlungsfluß, welcher mit der auf dem zylindrischen Informationsträger 2 aufgezeichneten Information durchmoduliert ist, trifft am Fotoempfänger 7 ein, in dem er in ein elektrisches Signal umgewandlet wird. Aus diesem Signal wird in der Steuereinheit (der Vereinfachung halber nicht gezeigt) eine Information über die Nummer einer unter dem Strahlungsfluß befindlichen Informationsspur abgetrennt, die mit der Nummer der Spur verglichen wird, die der vorgegebenen Adresse zugeordnet ist. Bei Nichtübereinstimmung der Nummern der Spuren schickt die Steuereinheit an die Informationsadressierungseinheit 3 einen entsprechenden Befehl, auf den die beweglichen optischen Elemente den Strahlungsfluß entsprechend der vorgegebenen Adresse verschieben. Bei Bedarf wird außerdem von der Steuereinheit ein Befehl zur Umfokussierung der beweglichen Linse 10 auf einen anderen Aufzeichnungsschichtabschnitt erteilt. Alsdann wird in der Steuereinheit aus dem vom Ausgang des Fotoempfängers 7 abgenommenen elektrischen Signal eine Information gewonnen, die der Nummer eines unter dem Strahlungsfluß befind-

lichen Sektors entspricht. Im Falle der vollständigen Übereinstimmung der gelesenen und der vorgegebenen Adresse werden im Lesebetrieb die auf dem zylindrischen Informationsträger 2 geschriebenen Daten gelesen und im Schreibbetrieb auf die jeweilige Informationsspur die zu speichernden Daten aufgezeichnet. Dabei wird das zu schreibende Signal dem optischen Modulator 5 zugeführt.

Diese Bauart des optischen Speichers gewährleistet eine erhöhte Zuverlässigkeit der Aufzeichnung und Speicherung von Informationen, weil der zylindrische Behälter I4 den zylindrischen Informationsträger 2 gegen Beschädigungen und Verunreinigungen effektiv schützt.

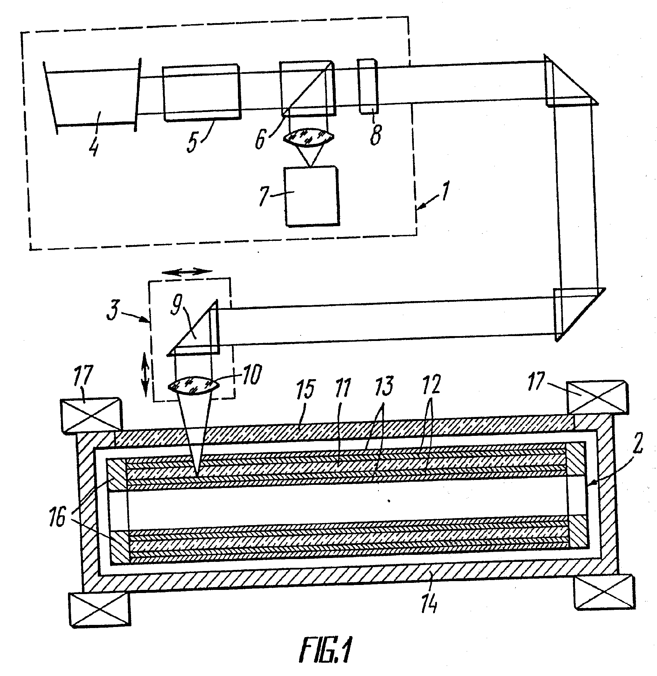

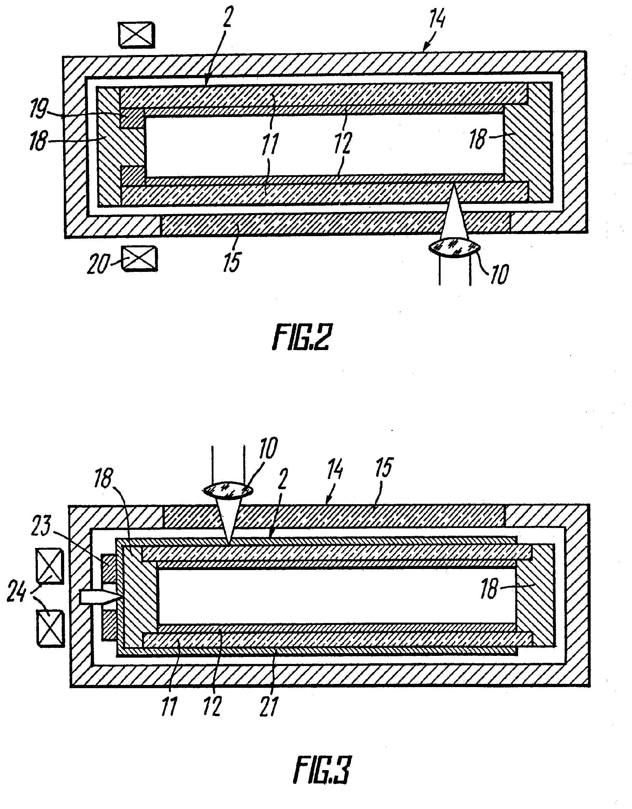

Es ist eine Ausführungsform des optischen Speichers möglich, bei der das röhrenförmige Substrat II (Fig. 2) aus einem für den Strahlungsfluß durchsichtigen Material besteht. Auf die Innenfläche des Substrats ist eine Aufzeichnungsschicht I2 aufgetragen, während an seinen Stirnenden Abdichtungsbuchsen I8 angebracht sind. Die Abdichtungsbuchsen I8 können eine beliebige Gestalt haben und aus einem Werkstoff bestehen, dessen Temperaturausdehnungskoeffizient dem des Materials des durchsichtigen röhrenförmigen Substrates II gleich ist. An der Innenfläche des röhrenförmigen Substrates II ist auf einer dessen Stirnseiten ein Läufer I9 eines Elektromotors angeordnet, dessen Ständer 20 an der äußeren Seitenwand des zylindrischen Behälters I4 eingebaut ist und den Läufer I9 umgibt. Im übrigen ist die konstruktive Ausführung des optischen Speichers und dessen Wirkungsweise ähnlich der konstruktiven Ausführung bzw. der Wirkungsweise des optischen Speichers nach Fig. I.

Dadurch, daß der zylindrische Informationsträger 2 hermetisch ausgeführt ist, wird es möglich, beim behandelten optischen Speicher den Schutz der Aufzeichnungsschicht I2 gegen Beschädigungen in noch größerem Maße zu erhöhen und Verunreinigungen der Aufzeichnungsschicht I2 völlig auszuschließen.

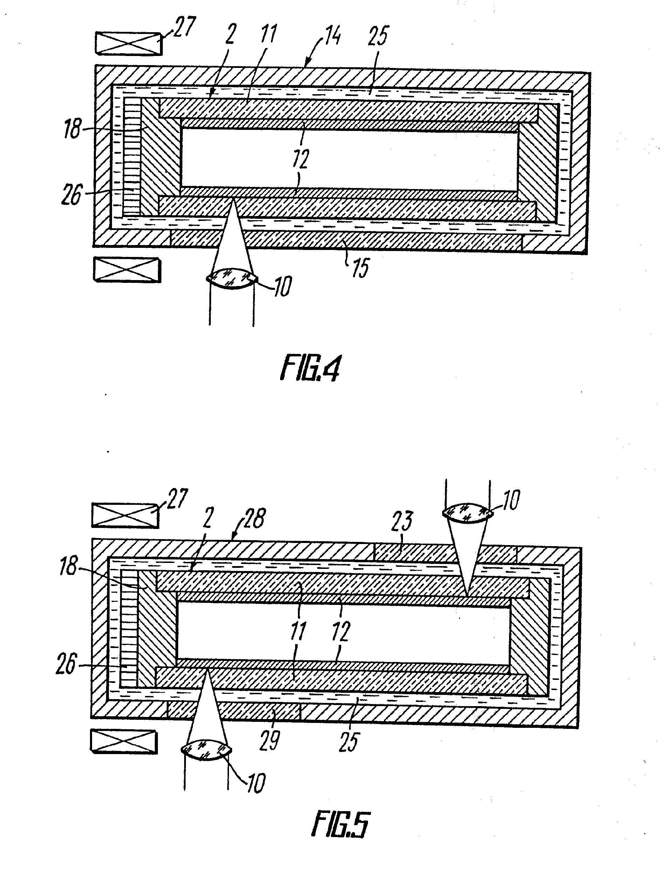

Denkbar ist auch eine Abwandlung des in Fig. 2 gezeigten optischen Speichers, bei der auf der Außenfläche des röhrenförmigen Substrates II (Fig. 3) und auf den Abdichtungsbuchsen I8 eine elektrisch leitende Schicht 2I auf-

getragen ist, die über einen Stift 22 mit dem zylindrischen Behälter I4 verbunden ist. Der Läufer 23 des Elektromotors zum Drehen des zylindrischen Informationsträgers 2 befindet sich an der Stirnseite einer der Abdichtungsbuchsen I8, während der Ständer 24 an dem Stirnende des zylindrischen Behälters I4 auf der gleichen Seite eingebaut ist, auf der der Läufer 23 des Elektromotors angeordnet ist.

Im übrigen ist die Bauart und Wirkungsweise des optischen Speichers analog der Bauart bzw. der Wirkungsweise der optischen Speicher nach Fig. I und 2.

Das Vorhandensein der elektrisch leitenden Schicht ermöglicht das Abfließen einer Ladung statischer Elektrizität, die infolge der Reibung zwischen dem Informationsträger 2 und dem den zylindrischen Behälter I4 ausfüllenden gasförmigen Medium entsteht, von deren Außenfläche zum zylindrischen Behälter I4. Dadurch wird der Verunreinigungsgrad des Informationsträgers 2 verringert und dementsprechend die Zuverlässigkeit bei der Informationsaufzeichnung erhöht.

Es ist eine weitere Ausführungsform des optischen Speichers möglich, bei der der Innenraum des zylindrischen Behälters I4 (Fig. 4) mit einem flüssigen Medium 25 (z.B. destilliertem Wasser) gefüllt, die Aufzeichnungsschicht I2 auf die Innenfläche des röhrenförmigen Substrates II aufgetragen ist, an dessen Stirnenden die Abdichtungsbuchsen I8 eingebaut sind. An einer der Abdichtungsbuchsen ist ein Läufer 26 eines Elektromotors zum Drehen des zylindrischen Informationsträgers 2 angebracht, dessen Ständer 27 an der Seitenwand des zylindrischen Behälters I4 angeordnet ist und den Läufer 26 umgibt.

Im übrigen ist die Bauart und Wirkungsweise des optischen Speichers ähnlich der Bauart bzw. der Wirkungsweise des optischen Speichers nach Fig. I.

Durch das im Innenraum des zylindrischen Behälters I4 befindliche flüssige Medium 25 werden radiale und axiale Schläge des zylindrischen Informationsträgers 2 gedämpft, wodurch die Genauigkeit der automatischen Fokussierung und Verfolgung der Informationsspur erheblich erhöht wird. Somit wird die Schreibdichte und die Zuverlässigkeit beim Schreiben und Lesen von Informationen gesteigert.

. Um die Schreib- und Lesegeschwindigkeit zu vergrößern, können im optischen Speicher mehrere Quellen I einer modulierten kohärenten Strahlung (Fig. 5) verwendet werden. In diesem Fall werden in der Seitenwand des zylindrischen Behälters 28 mehrere Schlitze 29 ausgeführt, die mit für den Strahlungsfluß durchsichtigen Elementen befüllt, als welche zylindrische Linsen benutzt werden können. Die Anzahl von Schlitzen 29 entspricht der Anzahl der Quellen I der modulierten kohärenten Strahlung.

Der Hohlraum des Behälters 25 ist mit einem flüssigen Medium 25 gefüllt.

Im übrigen ist die Bauart und Wirkungsweise des optischen Speichers analog der Konstruktion bzw. der Wirkungsweise des optischen Speichers nach Fig. 4.

Also gewährleistet die konstruktive Ausführung der obenbeschriebenen optischen Speicher eine erhöhte Informationsschreibdichte und eine höhere Zuverlässigkeit beim Schreiben, Lesen und Speichern von Informationen.

Gewerbliche Anwendbarkeit

Die vorliegende Erfindung kann in der Rechentechnik, in Einrichtungen zur Bild- und Schallaufzeichnung, in Systemen zur Speicherung und Verarbeitung von Informationen, insbesondere in externen Speichern elektronischer Rechner eingesetzt werden.

PATENTANSPRÜCHE

I. Optischer Speicher, enthaltend -optisch gekoppelt- eine Quelle (I) einer modulierten kohärenten Strahlung, einen zylindrischen Informationsträger (2) mit einem Antrieb zu dessen Drehung und einer auf ein röhrenförmiges Substrat (II) aufgetragenen Aufzeichnungsschicht (I2) und eine Informationsadressierungseinheit (3), die mit Möglichkeit einer axialen Verschiebung optischer Elemente relativ zum Informationsträger (2), dadurch gekennzeichnet, daß der zylindrische Informationsträger (2) in einem fest angebrachten zylindrischen Behälter (I4, 28) untergebracht ist, der mit einem für den Strahlungsfluß von der Quelle (I) der modulierten kohärenten Strahlung durchsichtigen flüssigen oder gasförmigen Medium gefüllt ist.

2. Optischer Speicher nach Anspruch I, dadurch gekennzeichnet, daß der zylindrische Informationsträger (2) mit einem Antrieb zu seiner Drehung versehen ist, dadurch gekennzeichnet, daß als Drehantrieb ein Elektromotor benutzt ist, dessen Läufer (I6, 26) an mindestens einem der Stirnenden des zylindrischen Informationsträgers (2) und dessen Ständer (I7, 27) an der Außenfläche des fest angebrachten zylindrischen Behälters (I4, 28) eingebaut ist.

3. Optischer Speicher nach Anspruch I, in dem der zylindrische Informationsträger (2) mit einem Drehantrieb versehen ist, dadurch gekennzeichnet, daß als Drehantrieb ein Elektromotor benutzt ist, dessen Läufer an der Seitenfläche des zylindrischen Informationsträgers (2) und dessen Ständer (20) an der Außenfläche des fest angebrachten zylindrischen Behälters (I4) angeordnet ist.

4. Optischer Speicher nach Anspruch I, dadurch gekennzeichnet, daß an den Stirnteilen des röhrenformigen Substrates (II) des zylindrischen Informationsträgers (2) Abdichtungsbuchsen (I8) angeordnet sind.

5. Optischer Speicher nach Anspruch I, dadurch gekennzeichnet, daß der zylindrische Behälter (I4,28) aus einem für den Strahlungsfluß durchsichtigen Werkstoff besteht und in seiner zylindrischen Wand mindestens ein Schlitz (I5,29) vorhanden ist, in dem ein für den Strahlungsfluß von der Quelle (I) der modulierten kohärenten Strahlung durchsichtiges Element angeordnet ist.

6. Optischer Speicher nach Anspruch 5, dadurch gekennzeichnet, daß das im Schlitz angeordnete durchsichtige Element als zylindrische Linse ausgebildet ist.

7. Optischer Speicher nach Anspruch I, dadurch gekennzeichnet, daß im zylindrischen Informationsspeicher (2) die Aufzeichnungsschicht auf die Außen- und Innenfläche des röhrenförmigen Substrates (II) aufgetragen ist.

8. Optischer Speicher nach Anspruch I, dadurch gekennzeichnet, daß auf die Außenfläche des zylindrischen Informationsträgers (2) eine für den Strahlungsfluß von der Quelle (I) der modulierten kohärenten Strahlung durchsichtige elektrisch leitende Schicht (2I) aufgetragen ist, die mit dem zylindrischen Behälter (I4) in elektrischem Kontakt steht.

FIG.1

0254749

FIG.2

FIG.3

FIG.4

FIG.5

# INTERNATIONAL SEARCH REPORT

International Application No PCT/SU 87/00019

**I. CLASSIFICATION OF SUBJECT MATTER** (if several classification symbols apply, indicate all) •

According to International Patent Classification (IPC) or to both National Classification and IPC

IPC⁴: G 11 B 7/24

**II. FIELDS SEARCHED**

| Minimum Documentation Searched ⁷ | |
|---|---|
| Classification System | Classification Symbols |
| IPC⁴ | G 11 B 7/00, 7/24, 23/02 |

Documentation Searched other than Minimum Documentation
to the Extent that such Documents are Included in the Fields Searched ⁸

**III. DOCUMENTS CONSIDERED TO BE RELEVANT ⁹**

| Category ⁰ | Citation of Document, ¹¹ with indication, where appropriate, of the relevant passages ¹² | Relevant to Claim No. ¹³ |
|---|---|---|
| A | EP, A1, 0051339, (North American Philips Corporation), 12 May 1982 (12.05.82), see the claims, figure 1. | 1-9 |
| A | FR, A1, 2479525, (SONY CORPORATION), 02 October 1981 (02.10.81), see the claims, figure 4 | 1-9 |
| A | DE, A1, 3203599, (Tokyo Shibaura Denki K.K.), 12 August 1982 (12.08.82), see figure 1, page 6 | 1-9 |

---

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 04 May 1987 (04.05.87) | 20 May 1987 (20.05.87) |
| International Searching Authority | Signature of Authorized Officer |
| ISA/SU | |

Form PCT/ISA/210 (second sheet) (January 1985)